# EUROPEAN PATENT APPLICATION

(11) **EP 3 108 960 A1**
(43) Date of publication of application: **28.12.2016**
(21) Application number: 15752767.2
(22) Date of filing: 22.01.2015
(51) Int. Cl.: B01J 20/04, B01D 53/14, B01J 20/06, B01J 20/08, B01J 20/12, B01J 20/14, B01J 20/28, C10K 1/12, C10K 1/20, C10K 3/04

(54) **HALOGEN COMPOUND ABSORBENT AND METHOD OF PRODUCING SYNGAS USING SAME**

(30) Priority: 18.02.2014 JP 2014028500
(71) Applicant: Clariant Catalysts (Japan) K.K., Tokyo 113-0021 (JP)
(72) Inventor: CHEN, Xin, Toyama-shi Toyama 939-2753 (JP); HERY, Jon, Toyama-shi Toyama 939-2753 (JP); OKANO, Yukihiro, Toyama-shi Toyama 939-2753 (JP); KISHI, Nobutaka, Toyama-shi Toyama 939-2753 (JP); YATSUDA, Masanori, Toyama-shi Toyama 939-2753 (JP)
(74) Representative: Raynor, Stuart Andrew
(86) International application number: PCT/JP2015/000284
(87) International publication number: WO 2015/125411

(57) **Abstract**

There is provided an absorbent for decreasing the leakage of halogen compound gases in subsequent processes, at high temperature and in the presence of high concentration water vapor in the process of heating and gasifying a fuel such as coal to produce synthesis gas.

The present invention relates to a halogen compound absorbent containing 30 to 90% by mass of a basic calcium compound and 10 to 70% by mass of a compound of a metal other than calcium and/or of a clay mineral, and a method for producing synthesis gas using the absorbent.

## Description

### Technical Field

The present invention relates to a halogen compound absorbent and a method for producing a synthesis gas using the same.

### Background Art

In recent years, from the viewpoint of alternatives to petroleum resources, global environmental pollution prevention, and the like, the development of diverse techniques has been promoted toward the practical use of new energy. For example, attention is drawn to a method for preparing synthesis gas comprising, as main components, hydrogen and carbon monoxide CO by introducing steam and an oxidant (air or oxygen) into a gasification furnace while coal is heated to 1000°C or more in the gasification furnace, thereby partially combusting the coal (partial oxidation method). The synthesis gas can be used for hydrogen gas fuels for fuel cells, thermal power generation fuels, and the like in addition to the use as chemical raw materials for the synthesis of methanol and the like, and therefore the improvement of the process is enthusiastically promoted (Patent Literature 1).

In addition, from the perspective of the effective use of resources other than coal, techniques for recycling biomass and for reusing industrial waste, city waste, and the like are required. As a promising means for these, there is a crude synthesis gas production process based on a principle similar to that of the above partial oxidation method (Patent Literature 2). The raw material for such crude synthesis gas production contains a larger amount of impurities, compared with generally used fuels such as natural gas and petroleum, and in turn, the crude synthesis gas contains a larger amount of impurities such as halogen compounds, sulfides, and mercury. Not only do these impurities such as halogen compounds have adverse effects on the environment but they also induce the poisoning of a chemical reaction catalyst in a synthesis gas production process, apparatus corrosion, and the like, and therefore their removal is extremely important.

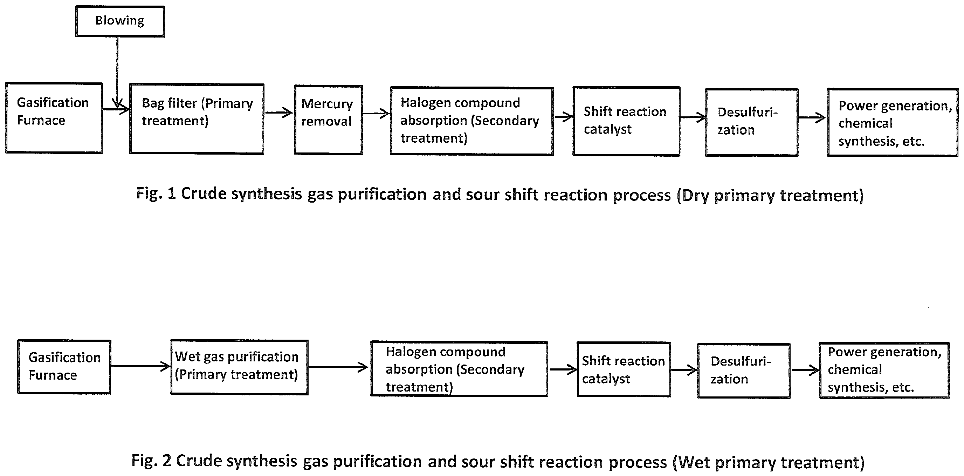

Synthesis gas production processes until the crude synthesis gas exiting such a gasification furnace is delivered as a purified gas and subjected to each application may change depending on the type of raw material of the crude synthesis gas, the application of the synthesis gas, the required quality, and the like, and therefore diverse methods are proposed so as to be able to address the change. As one example thereof, a process of performing a shift reaction before desulfurization (sour shift) is shown in the block diagram of Figure 1.

In Figure 1, halogen compounds such as hydrogen chloride in a crude gas exiting a gasification furnace are absorbed by a blown alkali agent such as slaked lime and collected by a bag filter. The crude gas from the bag filter is passed through a mercury removal apparatus and then a halogen compound gas absorption apparatus, and then the CO concentration is decreased by means of a shift catalyst in a CO conversion apparatus to increase hydrogen concentration. Then, the synthesis gas is guided to a desulfurization apparatus, and sulfur compounds such as hydrogen sulfide are removed, and the synthesis gas is delivered as a purified gas and subjected to each application.

A lot of strict performance is needed for halogen compound absorbents used in the halogen compound absorption (secondary treatment) immediately before the shift reaction apparatus in the process in Figure 1, compared with the general halogen compound absorbent used for the halogen compound primary treatment absorbent or the like immediately after the gasification furnace. The performance needed first is precision removal performance at high temperature and high humidity for an extended period of time.

The halogen compound secondary treatment absorbent in the synthesis gas production process is provided on the upstream side of the so-called water gas conversion reaction (shift reaction) apparatus in which CO is converted to CO₂ to increase hydrogen concentration. The first function of the halogen compound absorbent for this is to protect an Fe-Cr, Cu-Zn, Co-Mo, or Ni-Mo-based catalyst or the like, which may undergo poisoning by chlorine, by blocking chlorine. It is necessary to deliver a purified synthesis gas comprising high temperature and high concentration steam to the shift catalyst, and the halogen compound absorbent is required to have high absorption ability that can remove halogen compounds, for example, to 0.1 ppm or less, under such harsh conditions over a long period of time.

The first property required of the halogen compound absorbent is strong basicity, and its material thus preferably comprises a metal compound such as an alkali metal or alkaline earth metal compound.

The second property required of the halogen compound absorbent includes the maintenance and improvement of mechanical strength at high temperature and high steam concentration. For example, when a zinc oxide-based material conventionally known as a halogen compound absorbent is used, problems occur as, for example, zinc oxide absorbs water vapor in the crude synthesis gas and deliquesces to cause pressure loss (Patent Literature 2). In addition, it is also very important that the halogen compound absorbent has such physical strength that even if the halogen compound absorbent does not deliquescence, the absorbent which has absorbed halogen compounds does not become dust. For example, when the absorbent absorbs hydrogen chloride and becomes dust, it scatters in the subsequent shift reaction apparatus, poisons the catalyst, and is likely to cause process failure.

The third performance required of the halogen compound absorbent includes hydrogen sulfide permeability. When a shift reaction is done before desulfurization (sour shift; Figures 1 and 2), a Co-Mo or Ni-Mo-based catalyst is often used as a shift reaction catalyst. These catalysts are activated by a sulfide, leading to an improvement in the shift reaction rate. In such a case, hydrogen sulfide produced as an impurity in the gasification furnace is preferably used for the activation, and it is necessary that hydrogen sulfide passes through the halogen compound absorbent without being absorbed and remains on the shift catalyst in the crude synthesis gas.

A fourth performance required of the halogen compound absorbent includes exhibiting high absorption performance in the solid state. Some halogen compound absorbents are used in a scrubber in the form of an aqueous solution thereof. In a method that includes passing a crude synthesis gas through such a scrubber, the crude synthesis gas is cooled, and when a thermal power generation turbine or the like is operated, it is necessary to heat the gas again, thus leading to a decrease in the energy efficiency.

As means for addressing many strict requirements as described above in the process of the halogen compound absorption secondary treatment of the crude synthesis gas, the use of a conventionally known base compound such as sodium carbonate, calcium carbonate, calcium hydroxide, or sodium hydroxide is first contemplated. Although these compounds can be preferably used for the primary treatment by blowing them into the crude synthesis gas discharged from the gasification furnace, they do not exhibit sufficient performance and cannot achieve the above-described required levels when they are used as a halogen precision filter before the synthesis gas shift reaction.

As described above, many strict requirements are required of the halogen compound absorbing material used for the pretreatment of the shift reaction in the crude synthesis gas, and the fact is that conventionally, such a material has not been found.

### Citation List

### Patent Literature

Patent Literature 1: JP2013173898A
Patent Literature 2: JPH10236801A

### Summary of Invention

### Technical Problem

The present invention has been made in view of the above circumstances, and an object of the present invention is to provide a halogen compound absorbent having a high absorption ability that can precisely remove halogen compounds, particularly chlorine compounds, contained in a crude synthesis gas even under high temperature and high steam conditions, and a method for producing a synthesis gas using the same.

It is another object of the present invention to prevent the scattering of an absorbent which has absorbed halogen compounds to thereby prevent the poisoning of a shift reaction catalyst at a later stage.

It is still another object of the present invention to provide a halogen compound absorbent that can allow the passing-through of a hydrogen sulfide gas for activating a shift reaction catalyst, and a method for producing a synthesis gas using the same.

Furthermore, it is another object of the present invention to provide a halogen compound absorbent which allows a dry treatment and thus reduces
heat consumption, thereby improving the running cost, and a method for producing a synthesis gas.

### Solution to the Problem

In view of such actual circumstances, the present inventors have studied diligently in order to solve the drawbacks of the conventional art, and as a result obtained the following guidelines for solving the problems of the present invention:
(1) In order to have a high degree of absorption for acidic halogen compounds such as hydrogen chloride, it is preferable to utilize an acid-base reaction. As such basic compounds, compounds of metals such as alkali metals and alkaline earth metals are candidate materials.
(2) Particularly, in the case of a gas comprising a high concentration of water vapor like a crude synthesis gas, the absorbent needs to maintain the filter function in a state of halogens and water being absorbed thereon. For this, a search for a material that can maintain the filter structure in a state of halogens and water being absorbed thereon is necessary.
(3) It could be easily assumed that when a strong base such as sodium hydroxide is used as an absorbent, the ability to absorb halogen compounds increases. However, sodium hydroxide may react with hydrogen sulfide and not allow the passing-through of the hydrogen sulfide, and in addition vigorously generate heat when contacted with water, and therefore there is no choice but to use a dilute solution supported on a support. In this case, the amount of metal per absorbent decreases, and the ability to absorb halogen compounds decreases. Therefore, in order to absorb halogen compounds and allow the passing-through of hydrogen sulfide that is likewise acidic, it would not be sufficient for the absorbent to be an alkali, but a search for a material for this would be necessary.
(4) The present inventors studied various basic materials from the above perspectives and as a result considered that in order to meet the above requirements, the physical strength of the absorbent would also be necessary in addition to basicity. It was considered that for this, the improvement of physical properties would be necessary so that the absorbent could still maintain the filter function even in a state of halogens and water being absorbed thereon.

The present inventors have searched for various materials based on the above guidelines and as a result paid attention to calcium hydroxide (slaked lime) conventionally known for its high halogen absorption ability. The reasons are that calcium hydroxide is a strong base but exhibits behavior like a weak base because of its low solubility in water and is therefore preferred in terms of handling, safety, and the like, and its physical strength and the like can be easily enhanced and adjusted by mixing or modifying it with a compound of a different metal such as silicon or aluminium. Based on this guideline, while a calcium compound is used as a main component, many materials were considered. As a result, a halogen compound absorbent that can meet the above-described requirements has been found by mixing an appropriate amount of a different metal compound with calcium hydroxide and shaping, drying, and firing the mixture, and the present invention has been arrived at.

Specifically, the present invention includes:
(1) a halogen compound absorbent comprising 30 to 90% by mass of a basic calcium compound and 10 to 70% by mass of a metal compound other than calcium compounds and/or of a clay mineral;
(2) the halogen compound absorbent according to the above (1), wherein the basic calcium compound is one or more compounds selected from calcium hydroxide, calcium carbonate, calcium oxide, and calcium aluminate;
(3) the halogen compound absorbent according to the above (1) or (2), wherein the metal compound other than basic calcium compounds is the hydroxide, oxide, or carbonate of a metal other than calcium, particularly aluminium and nickel, or a mixture thereof;
(4) the halogen compound absorbent according to any one of the above (1) to (3), wherein the metal compound other than basic calcium compounds is one or a mixture of two or more selected from aluminium hydroxide, aluminium oxide, nickel oxide, nickel carbonate, nickel hydroxide, boehmite, diatomaceous earth, and attapulgite;
(5) the halogen compound absorbent according to any one of the above (1) to (4), wherein the basic calcium compound is calcium hydroxide, and the metal of the metal compound other than calcium compounds is aluminium or nickel;
(6) the halogen compound absorbent according to any one of the above (1) to (5), having a surface area of 20 to 300 m²/g as measured by the BET method;
(7) the halogen compound absorbent according to any one of the above (1) to (6), having a pore volume of 0.1 to 1.0 ml/g;
(8) the halogen compound absorbent according to any one of the above (1) to (7), having a strength of 50 to 250 N in the form of a tablet or a pellet;
(9) a process for preparing synthesis gas, comprising steps of:
   a) heating a raw material in the presence of water vapor to form a crude synthesis gas; and
   b) bringing the crude synthesis gas from the step a) into contact with a halogen absorbent according to any one of the above (1) to (8);
(10) the method according to the above (9), wherein the temperature of the crude synthesis gas introduced in step b) is at least 200°C, but at most 600°C;
(11) the method according to the above (9) or (10), wherein the crude synthesis gas introduced in step b) comprises water vapor in a proportion in the range of 10 to 50% by volume;
(12) the method according to any one of the above (9) to (11), wherein the crude synthesis gas is previously subjected to primary treatment of halogen compounds upstream of step b) to decrease the amount of the halogen compounds contained in the crude synthesis gas, and then the residual halogen compounds are further decreased in step b) as secondary treatment;
(13) the method according to the above (12), wherein the primary treatment is performed by the blowing of slaked lime or other basic compounds and using a bag filter;
(14) the method according to the above (12), wherein the primary treatment is performed using a wet scrubber;
(15) the method according to any one of the above (9) to (14), further comprising a synthesis gas shift step c) downstream of step b);
(16) the method according to the above (15), further comprising a desulfurization step d) at a stage after the synthesis gas shift step c);
(17) the method according to the above (16), wherein the crude synthesis gas comprises hydrogen sulfide;
(18) the method according to the above (15), further comprising a desulfurization step d) at a stage before the synthesis gas shift step c);
(19) the method according to any one of the above (9) to (18), wherein in step b), the crude synthesis gas is passed through a fixed-bed reactor which accommodates a halogen compound absorbent shaped in the form of pellets;
(20) the method according to any one of the above (9) to (19), wherein the halogen compound contained in the crude synthesis gas is decreased to 0.1 ppm or less after step b); and
(21) the method according to any one of the above (9) to (20), wherein the raw material is one or a mixture of two or more selected from coal, biomass, waste, city garbage, and waste plastic.

### Advantageous Effects of Invention

The halogen compound absorbent according to the present invention can selectively remove halogen compounds harmful to a shift catalyst at a later stage to low concentration, for example, 0.1 ppm or less, over a long time even under harsh conditions of high temperature and high water vapor concentration, while allowing the passing-through of a crude synthesis gas. In addition, there is provided a leakage preventing agent that has high permeability to hydrogen sulfide useful for a sour shift catalyst at a later stage and can be used in dry treatment and therefore suppresses the consumption of thermal energy and can decrease the running cost of a plant. In addition, the present invention provides a halogen compound absorbent that can also prevent halogen poisoning of a shift catalyst for a shift reaction after desulfurization (sweet shift reaction), for example, Fe-Cr-based and Cu-Zn-based catalysts. Furthermore, the present invention provides a method for precisely removing halogen compounds that can be applied to both sour shift and sweet shift processes using the above halogen compound absorbent.

### Brief Description of Drawings

[Figure 1] Figure 1 is a block diagram of one example of a process starting from the formation of a crude synthesis gas in a gasification furnace from a fuel such as coal, through precision purification in a dry method and shift reaction, to the supplying of synthesis gas as a power generation fuel or a chemical synthesis raw material.
[Figure 2] Figure 2 is a block diagram including the wet primary treatment of a crude synthesis gas exiting a gasification furnace, through precision purification steps as in Figure 1, and the supplying of the gas thus purified.
[Figure 3] Figure 3 is a block diagram showing one example of a sweet shift reaction in which desulfurization is performed before a shift reaction.
[Figure 4] Figure 4 is a block diagram of an apparatus for evaluating halogen compound absorbency and hydrogen sulfide permeability under high temperature and high humidity conditions.
[Figure 5] Figure 5 shows the results of the measurement of halogen compound leakage properties in Example 5.
[Figure 6] Figure 6 shows the results of the measurement of halogen compound leakage properties in the coexistence of hydrogen sulfide in Example 6.

### Description of Embodiments

The halogen compound absorbent according to the present invention comprises 30 to 90% by mass, preferably 50 to 80% by mass, of a basic calcium compound and 10 to 70% by mass, preferably 20 to 50% by mass, of a metal compound other than calcium compounds or of a clay mineral. Examples of the basic calcium compound include one or a mixture of two or more selected from calcium hydroxide, calcium carbonate, calcium hydroxide, and calcium aluminate. For the basic calcium compound according to the present invention, 70% or more, particularly preferably 90% or more, of the total mass of the basic calcium compound is preferably present as calcium hydroxide.

The above basic calcium compound is mixed with the other metal compound and/or clay mineral in a ratio by mass of 90-30: 10-70, fired, and then used. The other metal element can be appropriately selected from many elements, for example, Al, Si, Ti, Mg, Fe, Ni, and V. Among them, Al, Si, Mg, and Ni, particularly Al among them, are preferred.

As the other metal compound, metal oxides, hydroxides, and carbonates and the like are used, and one or a mixture of two or more of these compounds can also be used. In addition, they may be either artificial products or naturally-occurring products. Alumina or boehmite or a mixture thereof is particularly preferred. In addition, the compounds comprising elements such as Al, Si, and Mg are not limited to synthetic products and may be naturally-occurring products comprising these elements, such as clay, diatomaceous earth, and attapulgite.

The basic calcium compound is mixed and kneaded with the other metal compound and/or clay mineral, water, and the like, and formed into a necessary shape. The shaped material can be fired, for example, in an air atmosphere, at a temperature of 200 to 700°C, preferably 250 to 500°C, to obtain the halogen compound absorbent according to the present invention.

Examples of a preferred shape of the halogen compound absorbent according to the present invention include tablets, pellets, or granules. The size is not particularly limited, but the size is preferably suitably adjusted in accordance with the space velocity of the gas in terms of the process. As one example, a spherical shape or a cylindrical shape having a diameter of 1.0 to 8.0 mm, preferably 2.5 to 6.0 mm, after firing is preferred. In addition, an ellipsoid whose major axis is in the same range as the above and other shapes are also preferably used. In the case of a shape having a size of less than the range of these numerical values, the permeation rate of a target gas such as synthesis gas may decreases, leading to a reduction in production efficiency. On the other hand, in the case of a shape having a size exceeding these numerical values, the fear that halogen compounds leak without being absorbed tends to increase.

The halogen compound absorbent according to the present invention preferably has a surface area of 20 to 300 m²/g, particularly preferably 30 to 200 m²/g, after firing. The pore volume is preferably 0.1 to 1.0 ml/g, particularly preferably 0.15 to 0.6 ml/g. When the surface area is less than 20 m²/g, the halogen compound absorbency is low, and halogen compounds are likely to leak. In addition, when the surface area is more than 300 m²/g, the physical strength of the absorbent tends to decrease. Similarly, when the pore volume is less than 0.1 ml/g, the absorption performance is likely to decrease due to pore clogging. In addition, when the pore volume is more than 1.0 ml/g, the thickness of the side walls of the pores decreases, and the pellets are likely to break when coming into contact with other pellets or the like. As a result, pressure loss occurs when a gas is passed, and the permeability to the target gas is likely to decrease. The pore diameter of these is preferably 0.01 to 1.0 µm.

In order to obtain necessary gas filterability using the absorbent according to the present invention in a fixed bed, it is advantageous that the absorbent is formed into a suitable shape such as tablets or pellets by an extrusion method or the like. In order to maintain the shape, the pellet or tablet should preferably have a strength of 50 to 250 N, particularly preferably 70 to 200 N. When the strength is smaller than 50 N, shapes such as tablets are likely to collapse and cause pressure loss. In addition, an attempt to obtain a strength of more than 250 N involves side effects such as pore collapse and is thus not preferred.

There are still many unclear points regarding the mechanism in respect of why can the absorbent comprising 30 to 90% by mass of a basic calcium compound and 10 to 70% by mass of a metal compound other than calcium compounds or of clay mineral according to the present invention exhibit an excellent filter function compared with a material not comprising the other metal compound than calcium compounds or clay mineral as well as why can the absorbent selectively allow the passing-through of synthesis gas. However, the following is presumed:

As described above, calcium hydroxide itself has a high ability to absorb halogen compounds but has low physical strength in a dry state, and therefore it is difficult to maintain the shape necessary as a filter structure. Therefore, when the calcium hydroxide comes into contact with hydrogen chloride, water vapor, and the like, it forms moisture-absorbing calcium chloride and deliquesces to cause a pressure loss or the like of synthesis gas or the like to be passed, and necessary permeation performance is not obtained. In contrast to this, the system according to the present invention obtained by adding a structure-reinforcing material such as aluminium hydroxide to calcium hydroxide has improved physical strength after firing, and can maintain its shape and function as a filter even after coming into contact with a high temperature crude gas comprising halogens and water vapor.

There are also many unclear points regarding why the absorbent according to the present invention is able to absorb halogen compounds and allow the passing through of a hydrogen sulfide gas that is likewise acidic. However, the following is presumed:

Hydrogen chloride is a strong acid, and on the other hand, hydrogen sulfide is a weak acid. In contrast to this, it is said that calcium hydroxide is a strong acid but exhibits behavior as a weak acid because of low solubility in water. When hydrogen chloride, a strong acid, and hydrogen sulfide, a weak acid, simultaneously come into contact with the halogen compound absorbent, HCl preferentially undergoes a neutralization reaction with calcium hydroxide, and some of the hydrogen sulfide is absorbed, but most of hydrogen sulfide that cannot undergo neutralization is discharged in such a manner that it is forced out of the absorbent.

Aside from the truth or validity of the hydrogen sulfide permeation mechanism described above, the absorbent according to the present invention allows sufficient passing-through of hydrogen sulfide, as described in later Examples. In addition, the halogen compound leakage prevention performance of the absorbent according to the present invention is extremely high. This is a great merit in that this absorbent can be flexibly adapted to various different synthesis gas processes.

A method for producing a synthesis gas using the halogen compound-removing agent according to the present invention will be described based on Figure 1.

As shown in Figure 1, with a crude synthesis gas produced in a gasification furnace remaining at high temperature (for example, 450°C) (an operating temperature exceeding the dew point), a primary absorbent for halogen compounds is blown into the gas. As a result, some of hydrogen chloride (HCl) and hydrogen fluoride (HF) are absorbed by the halogen compound absorbent (primary treatment). The powder which has absorbed halogen compounds is filtered by a bag filter, for example, under a temperature condition of 180°C to 230°C. Thus, solid impurities such as dust are filtered and removed, and most of the halogen compounds are removed (rough purification), and some halogen compounds pass through the bag filter. This halogen compound absorbent for primary treatment may be the halogen compound absorbent according to the present invention or a general-purpose basic compound such as calcium hydroxide or sodium carbonate.

A mercury removal reactor is provided downstream of the bag filter, and, for example, an absorbent mainly comprising a copper-based compound, as a mercury absorbent, is filled in the mercury removal reactor. In the mercury removal reactor, the mercury contained in the crude synthesis gas is removed.

A halogen compound precision removal reactor is further provided downstream of the mercury removal reactor. In this halogen compound removal reactor, the halogen compound absorbent according to the present invention is filled in a fixed-bed filling vessel, for example, in the form of pellets. In the halogen compound removal reactor, halogen compounds hydrogen chloride (HCl) and hydrogen fluoride (HF) are simultaneously precisely absorbed and removed, for example, to 0.1 ppm or less.

The synthesis gas from which the halogen compounds have been precisely removed is subjected to a shift reaction (sour shift reaction) before desulfurization, and thus a hydrogen-rich synthesis gas (syngas) is obtained. This synthesis gas is further desulfurized and used as a chemical raw material for methanol synthesis, FT (Fischer-Tropsch) synthesis, ammonia synthesis, or the like, a turbine power generation fuel, a fuel gas for a fuel cell, or the like.

The system shown in Figure 2 is similar to the system shown in Figure 1. In this case, the gas exiting the gasification furnace is subjected to the primary absorption for halogen compounds and the removal of mercury and the like by a wet scrubber, and then subjected to halogen compound absorption secondary treatment similar to that in Figure 1.

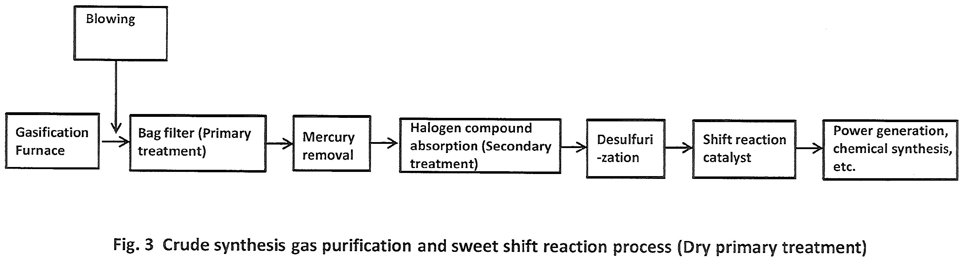

Both Figures 1 and 2 show processes of performing a shift reaction before desulfurization (sour shift), but not only these, it is also possible to perform a shift reaction after desulfurization (sweet shift reaction), as shown in Figure 3. This sweet shift reaction is performed when hydrogen sulfide is not particularly needed for the activation of a shift catalyst. The halogen compound absorbent according to the present invention also has a precision removal function for a crude synthesis gas not comprising hydrogen sulfide and therefore can also be preferably used for synthesis gas production in the form of such sweet shift process. It is also similarly possible to place the desulfurization apparatus in Figure 3 before the halogen compound absorbent.

As described regarding Figure 1, the gas delivered from the gasification furnace is subjected to primary treatment (rough purification) with a halogen-removing agent powder while being still at high temperature and still containing water vapor, then mercury is removed, and then halogen compounds are precisely removed with the halogen compound absorbent according to the present invention filled in a fixed-bed filling vessel. By separating halogen compounds in rough purification and precision purification in this manner, the leakage concentration can be decreased to 0.1 ppm or less, and the respective amounts of the absorbent at the former stage and the absorbent at the later stage consumed can be reduced. In addition, dry treatment is possible, and therefore the consumption of thermal energy is also low. Furthermore, the waste which has absorbed halogen compounds is easily subjected to post-treatment and reuse in the form of calcium chloride or others, and therefore the load on the environment is also small. As a result of modification with a different metal such as aluminium, the absorbent according to the present invention is prevented from becoming dust when filled in a fixed-bed filling vessel and scattering in subsequent processes. Such scattering is likely to occur when the mechanical vibration and the like of the reaction apparatus are large, and therefore the absorbent according to the present invention can further enhance the reliability of the process.

### Examples

The present invention will be illustrated in detail below by Examples, but the scope of the present invention is not limited to these Examples.

### Example 1

A halogen compound absorbent I (Ca-Al-based) was prepared by the following method: 70% by mass of calcium hydroxide and 30% by mass of aluminium hydroxide were mixed thoroughly, 20% to 30% by mass of water was further added based on the mass of the mixture, and the mixture was kneaded by a kneader for 10 to 30 min. Then, by means of an extruder, the kneaded material was extruded and shaped into a cylindrical shape having a diameter of 4.5 mm to give pellets. The obtained shaped body was heated and fired in an air atmosphere at 300°C for 1 hour to obtain the halogen compound absorbent I according to the present invention. The physical properties of the obtained pellets were as follows:
Surface area: 75 m²/g
Pore volume: 0.24 ml/g
Pellet crushing strength: 146 N

The surface area was measured by N₂ gas adsorption (BET one-point method).

The pore volume was measured by mercury intrusion.

The crushing strength of the pellet was measured using equipment specialized for measuring catalyst pellet crushing strength. A pressure cylinder is pressed from above onto a sample placed on a sample stage at a constant speed, and the load value when the sample sandwiched and compressed between the sample stage and the pressure cylinder crushes is recorded as the crushing strength of the sample. The crushing strength of the pellet shown in the present invention is an average value of the measurement results for 30 pellets having a length of about 8 mm.

### Example 2

A kneaded material of a halogen compound absorbent was prepared analogously to that of Example 1 except that nickel carbonate was used instead of the aluminium hydroxide in Example 1. Then, a halogen compound absorbent II was made analogously to that of Example 1 except that the firing temperature was 350°C. The physical properties of the obtained pellets were as follows (the measurement methods are the same as above):
Surface area: 30 m²/g
Pore volume: 0.28 ml/g
Pellet crushing strength: 82 N

### Example 3

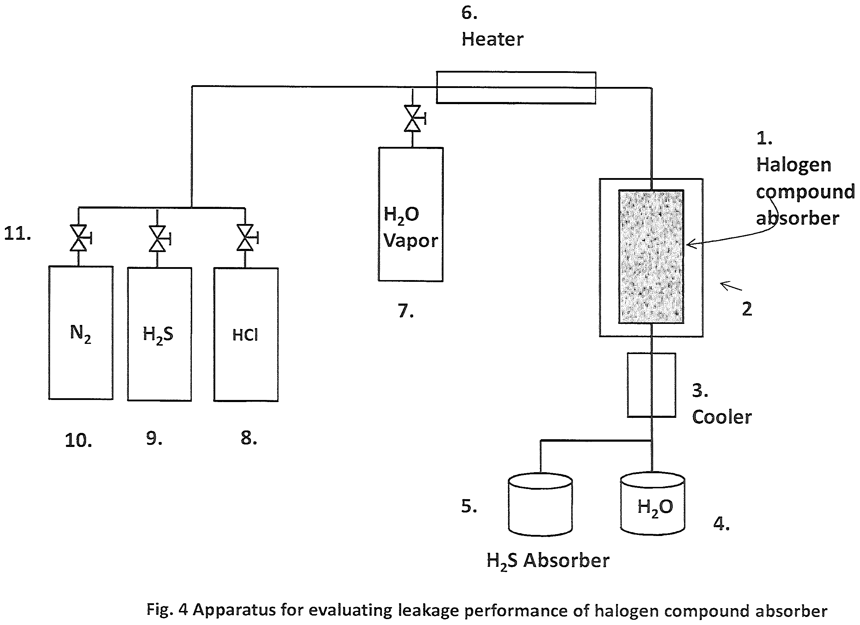

The HCl absorption performance of the Ca-Al-based absorbent according to the above Example 1 was measured and evaluated using an apparatus for evaluating halogen compound removal properties as shown in the block diagram of Figure 4. 20 ml of the absorbent I according to Example 1 was filled in a reaction tube 1 having an inner diameter of 20 mm, and its outlet was closed. Then, the nitrogen gas pressure was observed for 10 minutes or more, and it was found that there was no gas leakage. Then, while a N₂ gas was passed through, the absorbent I was heated to 320°C in 1 hour. While a water flow rate of 8.4 ml/min was maintained by a precision liquid mass flow rate instrument (not shown), the supplied water was vaporized by a vaporizer and mixed with HCl and a N₂ gas, and then the mixture was passed through the catalyst layer heated to 320°C. The reaction gas exiting the outlet of the reaction tube was cooled by a condenser 3, and the condensed water vapor was dropped into a container 4. This condensed and dropped liquid was sampled every hour, and the hydrogen chloride concentration was measured by ion chromatography. Hydrogen chloride has extremely high solubility in water and therefore condenses together with the above water. The time of the experiment for passing hydrogen chloride and water vapor through the absorbent I to measure leakage performance was 6 hours.

For other experimental conditions, the flow velocity (space velocity) of the hydrogen chloride/water vapor mixed gas was 5000 h⁻¹, the HCl in the gas at the inlet of the gas reaction tube was 0.1 % by volume, the H₂O was 30% by volume, and the flow rate of the mixed gas of H₂O and N₂ was 1667 L/min.

For the absorbent I of Example 1 (Ca-Al-based absorbent), no chlorine ions were detectable in the condensed liquid sample even after the gas had passed through for 6 hours.

### Example 4

A test was performed as in Example 3 except that the absorbent (Ca-Ni-based) from Example 2 was used. After 6 hours, no leakage of HCl from the outlet was found, and no chlorine was detectable in the condensed liquid from the condenser either.

### Comparative Example 1

An absorbent having a composition of Na₂O, Al₂O₃ (Na content: about 6.5% by mass) was provided as Comparative Example 1 of an absorbent. The Comparative Example 1 sample was measured and evaluated as in Example 3. As a result, after 1 hour, 3 mg of HCl was found in 20 g of the liquid sample in the outlet container 4. It was a leakage concentration of 137 ppm in terms of volume concentration.

### Comparative Example 2

Sodium 13X zeolite was provided as Comparative Example 2 of an absorbent. The Comparative Example 2 sample was measured and evaluated as in Example 3. As a result, after 4 hours, 2 mg of HCl was found in 18 g of the liquid sample in the outlet container. It was a leakage concentration of 97 ppm in terms of volume concentration.

### Comparative Example 3

Synthetic hydrotalcite (Mg(OH)₂-Al₂O₃) was provided as Comparative Example 3 of an absorbent. The Comparative Example 3 sample was measured and evaluated as in Example 3.

As a result, after 2 hours, 4 mg of HCl was found in 20 g of the liquid sample in the outlet container 4. It was a hydrogen chloride leakage concentration of 214 ppm in terms of volume concentration.

### Comparative Example 4

An iron-manganese complex oxide (iron oxide content: 50% by weight or more) was provided as Comparative Example 4 of an absorbent. The Comparative Example 4 sample was measured and evaluated as in Example 3.

As a result, after 3 hours, 4 mg of HCl was found in 20 g of the liquid sample in the outlet container 4. It was a hydrogen chloride leakage concentration of 214 ppm in terms of volume concentration.

The experimental data of Examples 1 to 2 and Comparative Examples 1 to 4 are shown in Table 1.

**[Table 1]**

| Experiment No. | Absorbent | Cl leakage detection time (Hour) | Cl concentration of recovered liquid in container (PPM) |
|---|---|---|---|
| Example 3 | Ca-Al-based | Not detectable | 0 ppm |
| Example 4 | Ca-Ni-based | Not detectable | 0 ppm |
| Comparative Example 1 | Na-Al-based | 1 | 137 ppm |
| Comparative Example 2 | Na-Si-based (zeolite) | 4 | 97 ppm |
| Comparative Example 3 | Mg-Al-based | 2 | 214 ppm |
| Comparative Example 4 | Fe-Mn-based | 3 | 214 ppm |

### Example 5

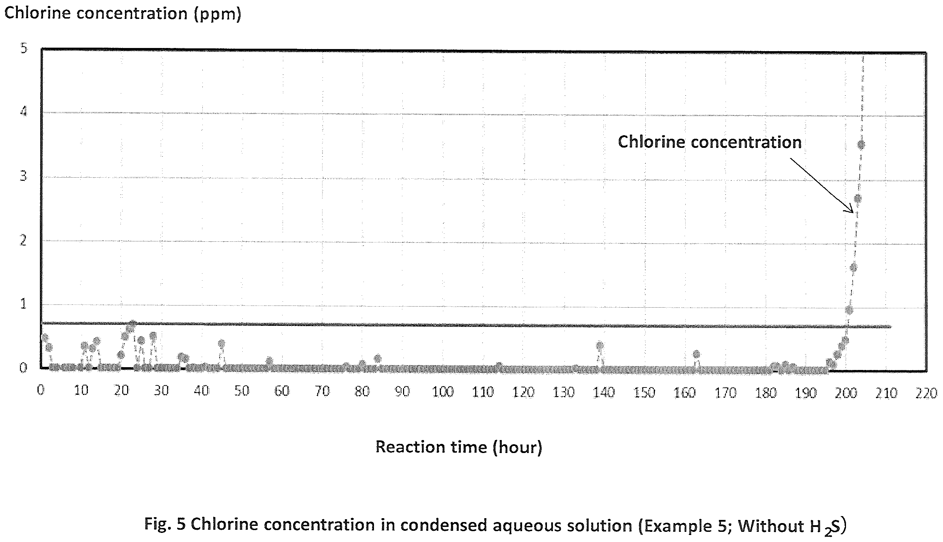

Using the Ca-Al-based absorbent from Example 1 and the apparatus shown in Figure 4, evaluation was performed with experimental conditions changed from the above. The flow velocity (volume velocity) of a mixed gas was 1/2 (2500 h⁻¹) as in Example 3, and a mixed gas of 0.05% by volume of hydrogen chloride gas and 30% by volume of water vapor with the remainder being N₂ was passed through under the condition of 1250 ml/min. In addition, the catalyst was formed into granules having a diameter of 1.4 to 1.7 mm, and then 30 ml of the catalyst was filled in the reaction tube. Other conditions were as in Example 3, and the hydrogen chloride mixed gas was passed through. The experiment was performed until the leakage of hydrogen chloride was observed. The results are shown in Figure 5. The leakage of HCl was found 201 hours after the gas introduction. It was found that the chlorine concentration of the solution at the outlet was 0.7 ppm (0.1 ppm in terms of chlorine concentration in the gas), showing high removal performance.

### Example 6

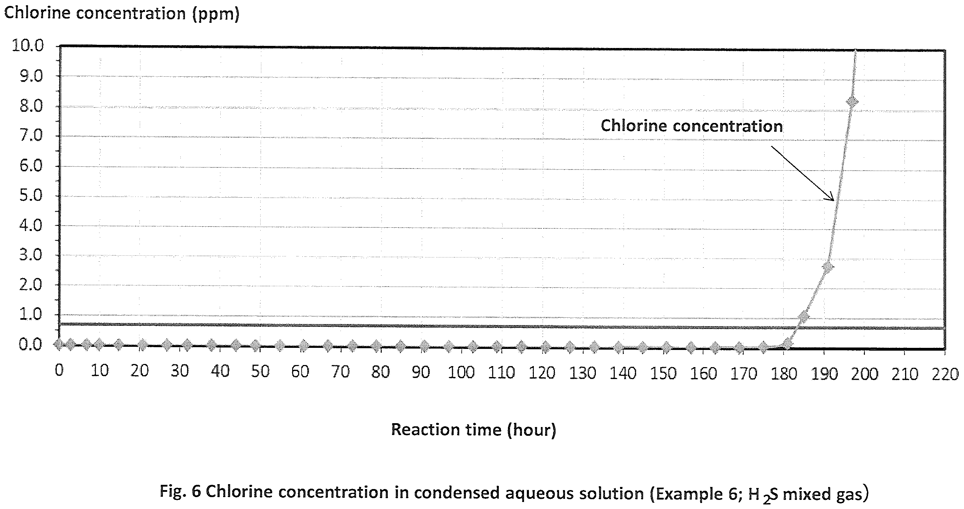

An experiment was performed as in Example 5 except that the sample from Example 1 was used, and 0.05% by volume of hydrogen sulfide gas was added to the HCl-water vapor-nitrogen mixed gas. The results are shown in Figure 6. The first leakage of HCl was observed 185 hours after the gas introduction. The chlorine ion concentration of the aqueous solution at the outlet was 0.7 ppm (0.1 ppm in terms of chlorine concentration in the gas), and high leakage prevention performance was observed. From the amount of sulfur recovered from the hydrogen sulfide absorption container, the degree of H₂S recovery was 95% or more relative to the amount of H₂S at the inlet. In other words, the halogen compound absorbent according to the present invention selectively absorbed HCl even if H₂S coexisted.

### Reference Signs List

- 1.: Reaction tube containing halogen compound absorbent
- 2.: Heater
- 3.: Condenser (cooler)
- 4.: Condensate container
- 5.: Hydrogen sulfide absorption container
- 6.: Heater
- 7.: Steam generation apparatus
- 8.: Hydrogen chloride gas cylinder
- 9.: Hydrogen sulfide gas cylinder
- 10.: Nitrogen gas cylinder

## Claims

1. A halogen compound absorbent comprising 30 to 90% by mass of a basic calcium compound and 10 to 70% by mass of a metal compound other than calcium compounds or of a clay mineral.

2. The halogen compound absorbent according to claim 1, wherein the basic calcium compound is one or more compounds selected from calcium hydroxide, calcium carbonate, calcium oxide, and calcium aluminate.

3. The halogen compound absorbent according to claim 1, wherein the metal compound other than basic calcium compounds is the hydroxide, oxide, or carbonate of a metal other than calcium, or a mixture thereof.

4. The halogen compound absorbent according to claim 1, wherein the metal compound other than basic calcium compounds is one or a mixture of two or more selected from aluminium hydroxide, aluminium oxide, nickel oxide, nickel carbonate, nickel hydroxide, boehmite, diatomaceous earth, and attapulgite.

5. The halogen compound absorbent according to claim 1, wherein the basic calcium compound is calcium hydroxide, and the metal of the metal compound other than calcium is aluminium or nickel.

6. The halogen compound absorbent according to claim 1, having a surface area of 20 to 300 m²/g as measured by the BET method.

7. The halogen compound absorbent according to claim 1, having a pore volume of 0.1 to 1.0 ml/g.

8. The halogen compound absorbent according to claim 1, having a strength of 50 to 250 N in the form of a tablet or a pellet.

9. A process for preparing synthesis gas, comprising steps of:
a) heating a raw material in the presence of water vapor to obtain a crude synthesis gas; and
b) bringing the crude synthesis gas from step a) into contact with a halogen absorbent according to claim 1.

10. The method according to claim 9, wherein the temperature of the crude synthesis gas introduced in step b) is at least 200°C, but at most 600°C.

11. The method according to claim 9, wherein the crude synthesis gas introduced in step b) comprises water vapor in a proportion in the range of 10 to 50% by volume.

12. The method according to claim 9, wherein the crude synthesis gas is previously subjected to primary treatment of halogen compounds upstream of step b) to decrease the amount of the halogen compounds contained in the crude synthesis gas, and then the residual halogen compounds are further decreased in step b) as secondary treatment.

13. The method according to claim 12, wherein the primary treatment is performed by the blowing of slaked lime or other basic compounds and using a bag filter.

14. The method according to claim 12, wherein the primary treatment is performed using a wet scrubber.

15. The method according to claim 9, further comprising a synthesis gas shift step c) downstream of step b).

16. The method according to claim 15, further comprising a desulfurization step d) at a stage after the synthesis gas shift step c).

17. The method according to claim 16, wherein the crude synthesis gas comprises hydrogen sulfide.

18. The method according to claim 15, further comprising a desulfurization step d) at a stage before the synthesis gas shift step c).

19. The method according to claim 9, wherein in step b), the crude synthesis gas is passed through a fixed-bed reactor which accommodates the halogen compound absorbent shaped in the form of pellets.

20. The method according to claim 9, wherein the halogen compound contained in the crude synthesis gas is decreased to 0.1 ppm or less after step b).

21. The method according to claim 9, wherein the raw material is one or a mixture of two or more selected from coal, biomass, waste, city garbage, and waste plastic.
